# EUROPÄISCHE PATENTANMELDUNG

(11) **EP 1 755 046 A1**
(43) Veröffentlichungstag der Anmeldung: **21.02.2007**
(21) Anmeldenummer: 05017808.6
(22) Anmeldetag: 17.08.2005
(51) Int. Cl.: G06F 17/30

(54) **Verfahren und Anordnung von Vorrichtungen zur Bereitstellung von Daten mehrerer Datensysteme an wenigstens einem Client**

(71) Anmelder: Deutsche Post AG, 53113 Bonn (DE)
(72) Erfinder: Westerweller, Jörg, 51570 Windeck / Rosbach (DE); Kranz, Jürgen, 50374 Erftstadt (DE)
(74) Vertreter: Jostarndt, Hans-Dieter

(57) **Zusammenfassung**

Die Erfindung betrifft ein Verfahren und eine Anordnung von Vorrichtungen zur Bereitstellung von Daten mehrerer Umsysteme (10;11;13) an wenigstens einem Client (20) eines computergestützten Filialsystems. Das Computersystem bildet ein Filialsystem eines Unternehmens ab, durch welches verschiedene Dienstleistungen abgewickelt werden können. Dabei werden sowohl Stammdaten, Strukturen und Filialdaten in einer zentralen Datenbereitstellungskomponente (40) hinterlegt, von dieser umgewandelt und in eine Datenbank (30) eingelesen, wobei es sich bei der Datenbank beispielsweise um einen SQL-Server handelt. Ein Delta-Generator (31) erzeugt aus einem alten und dem durch die Datenlieferungen erzeugten neuen Datenbestand eine Differenz und die Differenz wird in Form von zwei XML-Dateien an eine Kommunikationskomponente (100) übermittelt, welche die Daten an die Clients (20) verteilt. Die einzelnen Funktionsbereiche der Datenbereitstellungskomponente werden von einer zentralen Steuerungskomponente (60) in Form eines Messaging Systems gesteuert.

## Beschreibung

Die Erfindung betrifft ein Verfahren zur Bereitstellung von Daten mehrerer Datensysteme für wenigstens einen Client eines computergestützten Filialsystems, wobei das Verfahren den Betrieb einer zentralen Datenbereitstellungskomponente zur Annahme von Daten der Datensysteme und zur Weiterleitung der Daten an den Client beinhaltet. Das Computersystem bildet vorzugsweise ein Filialsystem eines Unternehmens ab, das Kunden den Zugang zu verschiedenen Dienstleistungen ermöglicht.

Die Erfindung betrifft ferner eine Anordnung von Vorrichtungen zur Durchführung des Verfahrens und ein computerlesbares Medium, das Befehle zum Ausführen der Schritte des Verfahrens auf einem Computermittel aufweist.

Gegenwärtig gibt es eine ganze Reihe von Geschäftsfeldern, die ein weit verzweigtes Filial- oder Automatensystem umfassen, um Kunden einen flächendeckenden Zugang zu verschiedenen Dienstleistungen eines Unternehmens zu ermöglichen. Beispielhaft können dazu Verkehrsunternehmen genannt werden, die ihren Kunden an zahlreichen Bahnhöfen und Flughäfen ihre Serviceleistungen anbieten. Hierzu gehören beispielsweise der Verkauf von Bahn- oder Flugkarten, die Annahme von Gepäck oder das Mieten von Kraftfahrzeugen.

Ein anderes Beispiel stellen Postunternehmen dar, die in fast jedem Ort in einem Land den Kunden eine umfangreiche Auswahl von Postdienstleistungen zur Verfügung stellen, wie zum Beispiel die Annahme von Briefen und Paketen, der Verkauf von Postwertzeichen sowie eine ganze Reihe von Bankdienstleistungen. Ferner können in Filialen Dienstleistungen im Bereich der Telekommunikation angeboten werden, wie es beispielsweise durch den Abschluss eines Mobiltelefonvertrags gegeben ist. Die genannten Dienstleistungen werden dabei nicht nur in eigenen Filialen des Postunternehmens, sondern auch an Automaten, bei Servicepartnern oder durch Internetauftritte angeboten und die Gesamtheit der an ein Netzwerk angeschlossenen Frontendstellen wird im Folgenden zur Vereinfachung als Filialsystem bezeichnet.

Üblicherweise werden die Verkaufs- und Beratungsdienstleistungen aus Gründen der Kosteneffizienz und Sicherheit durch Informationstechnik unterstützt. Die Abbildung von Geschäftsprozessen in einem Filialsystem erfordert jedoch einen hohen informationstechnischen Aufwand und üblicherweise müssen unterschiedliche Arten von Daten zwischen einer Filiale und einer zentralen Datenbank oder einem Zentralrechner ausgetauscht werden. Dabei wird das Filialsystem vorzugsweise durch eine Vielzahl von Clients gebildet, die über ein Netzwerk mit einem zentralen Verwaltungssystem verbunden sind.

Neben der zentralen Speicherung von Daten, welche an den Clients bei einem Geschäftsvorgang erzeugt werden, ist es ferner erstrebenswert, alle Clients mit Stammdaten des zentralen Verwaltungssystems zu versorgen. Die Stammdaten können dabei beispielsweise von einer zentralen Datenbank stammen, auf welche verschiedene Anwendungen Zugriff haben, so dass die Daten ständig verändert und aktualisierte Daten an die Clients übermittelt werden. Um die Daten möglichst effektiv zu transferieren, ist es bekannt, nicht den gesamten Datenbestand einer Datenbank an einen Client zu übermitteln, sondern die neuen Daten seit dem letzten Update zu ermitteln und dem Client lediglich diese Differenz bereitzustellen.

Aus der Internationalen Patentanmeldung WO 98/54662 A1 ist dazu beispielsweise ein Verfahren und ein System zur Übermittlung von Änderungen der Daten in einer zentralen Datenbank an verschiedene Clients bekannt. Die Daten in der Datenbank können von verschiedenen Anwendungen verändert und ergänzt werden, so dass ein aktueller Datenbestand stets gegen einen neuen Datenbestand abgeglichen und eine Differenz erzeugt wird. Die Differenz wird als Kopie einem Client übermittelt und der neue Datenbestand als aktuelle Version in die Datenbank übernommen. Bei den Kopien der Daten, welche an die Clients übermittelt werden, handelt es sich vorzugsweise um Daten, die von einem Client nur gelesen, aber nicht verändert werden können.

Stammdaten können jedoch auch von mehreren Umsystemen stammen, welche eine eigene Datenverarbeitung und -speicherung umfassen. Soll der Datenbestand aller Umsysteme an den verschiedenen Clients verfügbar gemacht werden, müssen für jedes Umsystem geeignete Schnittstellen geschaffen werden, um insbesondere verschiedene Datenformate und Anforderungen der Clients und Umsysteme abbilden zu können. Da diese Vorgehensweise ein komplexes Computersystem erfordert, welches nur sehr schwer an neue Anforderungen anpassbar ist, ist es zweckmäßig, eine zentrale Datenbereitstellungskomponente zu realisieren, welche die Aufbereitung und Verteilung von Daten der Umsysteme an die Clients durchführt.

Aufgabe der Erfindung ist es daher, ein Verfahren zur Bereitstellung von Daten mehrerer Umsysteme an verschiedenen Clients bereitzustellen, bei dem eine zentrale Datenbereitstellungskomponente eine Aufbereitung und Verteilung der Daten steuert. Dabei soll es ferner möglich sein, verschiedene Daten beispielsweise über ein Pflegetool auch manuell einzupflegen, so dass Daten nicht ausschließlich automatisiert von einem Datenlieferanten empfangen werden müssen.

Aufgabe der Erfindung ist es ferner, eine Anordnung aus Vorrichtungen mit einer solchen Datenbereitstellungskomponente und ein computerlesbares Medium, auf dem Befehle zur Durchführung des Verfahrens auf einem Computermittel gespeichert sind, bereitzustellen.

Erfindungsgemäß wird diese Aufgabe durch ein Verfahren mit den Merkmalen des unabhängigen Anspruchs 1 gelöst. Vorteilhafte Weiterbildungen des Verfahrens ergeben sich aus den Unteransprüchen 2-5. Die Aufgabe wird ferner durch eine Anordnung von Vorrichtungen nach Anspruch 6 gelöst. Vorteilhafte Ausführungsformen der Vorrichtung ergeben sich aus den Unteransprüchen 8-11, und Anspruch 12 gibt ein computerlesbares Medium an, in dem Befehle zum Ausführen der Schritte des Verfahrens auf einem Computermittel gespeichert sind.

Die Erfindung umfasst ein Verfahren zur Bereitstellung von Daten mehrerer Datensysteme für wenigstens einen Client eines computergestützten Filialsystems, wobei das Verfahren den Betrieb einer zentralen Datenbereitstellungskomponente zur Annahme von Daten der Datensysteme und zur Weiterleitung der Daten an den Client beinhaltet. Das Computersystem bildet vorzugsweise ein Filialsystem eines oder mehrerer Unternehmen ab, das Kunden Dienstleistungen an verschiedenen Frontendstellen bereitstellt. Bei den Datensystemen kann es sich beispielsweise um Umsysteme handeln, welche über eine eigene Datenhaltung verfügen und automatisiert Daten bereitstellen. Es kann sich ferner um Systeme handeln, an denen Daten nicht automatisiert erzeugt, sondern manuell in das System eingespeist werden. Das Verfahren sieht eine Hinterlegung von Verarbeitungsschemata für verschiedene Datenformate der angeschlossenen Datensysteme in einer Datenbank der zentralen Datenbereitstellungskomponente vor, wobei die Hinterlegung der Verarbeitungsschemata durch ein Steuerungsmodul der Datenbereitstellungskomponente gesteuert wird. Dateien werden von den Datensystemen an eine Übergabeschnittstelle der Datenbereitstellungskomponente übergeben und einer Vorverarbeitungskomponente zugeleitet. Die Übergabe wird ebenfalls durch das Steuerungsmodul gesteuert. Bei dem Steuerungsmodul handelt es sich beispielsweise um das Produkt BizTalk Server 2004 von Microsoft.

In der Vorverarbeitungskomponente erfolgt zuerst eine Prüfung der Datei. Ist die Prüfung erfolgreich, wird ein Verarbeitungsschema des sendenden Datensystems in eine Mapping-Komponente der Vorverarbeitungskomponente eingelesen und die Datei wird in eine Update-Datennachricht mit dem Format der Datenbank der Datenbereitstellungskomponente umgewandelt. Bei der Update-Datennachricht handelt es sich um Datenbankanweisungen, mit welchen die Daten eines betreffenden Umsystems in die Datenbank der Datenbereitstellungskomponente eingepflegt werden können. Wird als Datenbank beispielsweise ein SQL-Server verwendet, kann es sich bei der Update-Datennachricht um ein so genanntes Updategram bzw. SQL-Statements handeln.

Die Update-Datennachricht wird in der Vorverarbeitungskomponente persistiert, eine Lieferversion wird gesetzt und die Update-Datennachricht wird in die Datenbank eingespeist. Für die Ausgangsverarbeitung startet das Steuerungsmodul einen Deltagenerator, welcher eine Differenz zwischen einem zuletzt an einen Client übermittelten Datenbestand und dem aktuellen Datenbestand in der Datenbank erzeugt. Die erzeugte Differenz wird in ein Update-Datenpaket verpackt und die Steuerungskomponente erzeugt daraus zwei Dateien, von denen die erste Datei eine Datendatei und die zweite Datei eine Steuerdatei ist. Die beiden Dateien werden über eine Ausgangsschnittstelle an einen Client übermittelt. Die Datendatei und die Steuerdatei, welche an den Client übermittelt werden, liegen vorzugsweise im XML-Format vor.

In einem besonders bevorzugten Ausführungsbeispiel der Erfindung wird eine Datei von einem Datensystem/Umsystem im XML-Format an die Übergabeschnittstelle übergeben. Liegt die Datei nicht im XML-Format vor, wird sie vor der Umwandlung in eine Update-Datennachricht in ein XML-Format transformiert. Für die Umwandlung der Datei in eine Update-Datennachricht im Datenformat der Datenbank wird vorzugsweise eine Transformationsdatei aus der Datenbank in eine Mapping-Komponente der Datenbereitstellungskomponente eingelesen.

In einem besonders bevorzugten Ausführungsbeispiel der Erfindung werden Daten eines Pflegetools direkt in Form von Datenbankanweisungen wie beispielsweise SQL-Statements in die Datenbank der Datenbereitstellungskomponente eingespeist. Das Pflegetool wird wie ein Datensystem an die Datenbereitstellungskomponente angebunden. Ein weiteres Umsystem übergibt Filialdaten für die Verteilung der Stammdaten der Umsysteme als XML-Datei an die Datenbereitstellungskomponente, welche diese in eine Update-Datennachricht umwandelt und in die Datenbank einspeist. Dabei werden die gespeicherten Filialdaten von einer Verteilsteuerungskomponente für die Verteilung der Stammdaten an die Clients herangezogen.

Von der Erfindung umfasst ist ferner eine Anordnung aus Vorrichtungen zur Bereitstellung von Daten mehrerer Datensysteme für wenigstens einen Client eines computergestützten Filialsystems. Die Anordnung weist eine zentrale Datenbereitstellungskomponente zur Annahme von Daten der Datensysteme und zur Weiterleitung der Daten an den Client und Mittel zur Durchführung des erfindungsgemäßen Verfahrens auf.

Die Erfindung umfasst ferner ein computerlesbares Medium, das Befehle zum Ausführen der Schritte des erfindungsgemäßen Verfahrens auf einem Computermittel aufweist.

Ein wesentlicher Vorteil der Erfindung liegt in der Bereitstellung von Daten über eine zentrale Datenbereitstellungskomponente, welche zwar vorzugsweise mit XML-Dateien beliefert wird, die jedoch auch eine Transformation von Dateien in einem anderen Format vornehmen kann. Die gelieferten Daten werden automatisch in ein Datenmodell umgewandelt, das von der Datenbank der Datenbereitstellungskomponente gespeichert werden kann. Die Datenbank hält somit alle für die Clients relevanten Daten zentral vor und erzeugt lediglich Deltalieferungen für alle angeschlossenen Clients. Die Datenbereitstellungskomponente hält somit auch den gesamten Datenbestand aller Clients vor.

Dabei ist es vorteilhaft, dass die Prozesse innerhalb der Datenbereitstellungskomponente und die Kommunikation der Datenbereitstellungskomponente mit anderen Komponenten des Systems von einer Steuerungskomponente in Form eines Messaging Systems gesteuert werden. Bei dem Messaging System kann es sich beispielsweise um das Produkt BizTalk Server von Microsoft handeln.

Besonders vorteilhaft ist die Möglichkeit, dass die zur Verteilung der Stammdaten erforderlichen Filialdaten ebenfalls von einem Umsystem geliefert werden können, das wie die anderen Umsysteme an die Datenbereitstellungskomponente angeschlossen ist. Auch die Anbindung eines Pflegetools ist möglich, über welches neue Strukturen an die Clients übermittelt werden können. Über das Pflegetool können somit manuell jegliche Daten in der Datenbereitstellungskomponente hinterlegt und an die Clients verteilt werden. Auch die Konfiguration der Datenbereitstellungskomponente und insbesondere die Schemata zur Verarbeitung von Daten können über das Pflegetool eingepflegt werden.

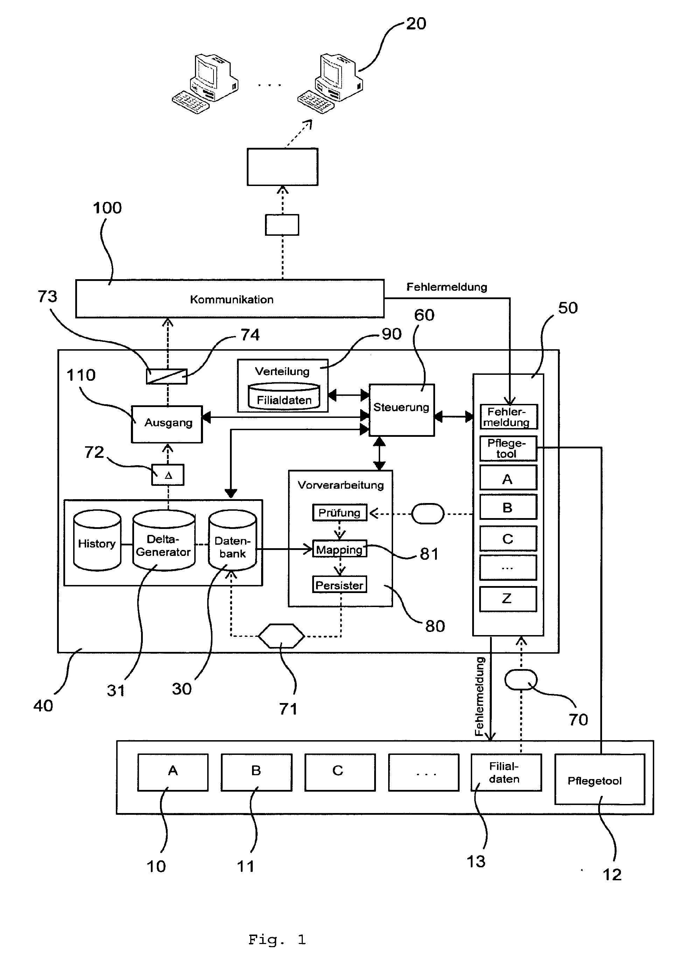

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung Fig. 1.

In Fig. 1 ist ein besonders bevorzugtes Ausführungsbeispiel einer Anordnung von Vorrichtungen mit einer Datenbereitstellungskomponente zur Verteilung von Daten mehrerer Datensysteme 10, 11, 12 und 13 an wenigstens einen Client 20 dargestellt. Die Datensysteme werden im Folgenden auch als Umsysteme bezeichnet. Das erfindungsgemäße Verfahren wird ebenfalls anhand der Fig. 1 erläutert, wobei der Transportweg einer Datei eines Umsystems durch die Anordnung von Vorrichtungen und die Umwandlung der darin enthaltenen Daten in verschiedene Formate schematisch mit einer gestrichelten Linie dargestellt ist.

Die erfindungsgemäße Anordnung umfasst wenigstens zwei Umsysteme 10 und 11, deren Datenbestände an wenigstens einem von mehreren Clients 20 bereitgestellt werden sollen. Von der Erfindung umfasst sind dabei Ausführungsformen, bei denen die Clients als Anwendungen auf Computern einer Filiale ausgeführt sind. Ebenfalls umfasst sind Ausführungsformen, bei denen eine gesamte Filiale als Client aufgefasst wird, so dass jede Filiale mit Daten versorgt wird, welche diese gegebenenfalls an ihre Untersysteme weiterverteilt. Bei der Verteilung der Stammdaten der Umsysteme an die Clients bzw. Filialen kann beispielsweise vorgesehen sein, dass alle Clients über den gleichen Stammdateninhalt verfügen sollen. In einer alternativen Ausführungsform erhalten einige Filialen eine Sonderverteilung, falls diese beispielsweise als Pilotfilialen für neue Systeme oder Sonderaktionen dienen sollen.

Bei der gesamten Anordnung handelt es sich vorzugsweise um ein Retail-System, das die Durchführung von Geschäftsvorgängen an mehreren Clients ermöglicht. Bei den Geschäftsvorgängen handelt es sich um Transaktionen wie beispielsweise Käufe, Einlieferungen, Vertragsabschlüsse oder Abfragen in allen Bereichen von Dienstleistungen.

Die Clients sind vorzugsweise als Computeranwendungen ausgeführt, die beispielsweise in mehreren Filialen eines Unternehmens angeordnet sind. An einem Client werden Vorgänge durchgeführt, welche die Verwendung von Daten verschiedener Umsysteme erfordern, weil beispielsweise in den Datensystemen der Umsysteme gespeicherte Kundendaten abgerufen werden müssen. Da Unternehmen in Filialen oftmals verschiedene Dienstleistungen anbieten, müssen dazu verschiedene Umsysteme angebunden werden. Werden in den Filialen eines Postunternehmens beispielsweise Telekommunikationsdienstleistungen wie Telefonanschlüsse oder Mobiltelefonverträge verschiedener Anbieter angeboten, müssen die Daten der jeweiligen Systeme der Anbieter an den Clients in der Filiale verfügbar gemacht werden. Das Gleiche gilt für Bankgeschäfte, Stromverträge, Warenverkäufe und natürlich die üblichen postalischen Dienstleistungen wie beispielsweise die Annahme von Postsendungen oder der Verkauf von Postwertzeichen.

Wird die Erfindung für Verkehrsunternehmen eingesetzt, die ihren Kunden an zahlreichen Bahnhöfen und/oder Flughäfen ihre Serviceleistungen anbieten, müssen den Clients beispielsweise Daten von Umsystemen für den Verkauf von Bahn- oder Flugkarten, die Annahme von Gepäck oder das Mieten von Kraftfahrzeugen bereitgestellt werden.

Dabei kann es vorgesehen sein, dass einzelne Clients in den Filialen nur eine Auswahl der Dienstleistungen anbieten, so dass nicht alle Clients über Daten aller Umsysteme verfügen müssen. Da von dem erfindungsgemäßen System auch Ausführungsformen umfasst sind, bei welchen die Daten nicht direkt an einzelne Clients, sondern der Filiale übermittelt werden, kann es vorgesehen sein, dass Daten in einer Filiale erneut danach verteilt werden, welcher Client welche Daten benötigt.

Die Umsysteme umfassen ferner ein Pflegetool 12, welches zur manuellen Einlieferung von Daten an die Clients dienen kann.

Über das Pflegetool können beispielsweise Daten verteilt werden, die nicht von einem Umsystem stammen, das Daten automatisch generiert. Das Pflegetool wird jedoch von der Datenbereitstellungskomponente als weiteres Umsystem angesehen. Dies ermöglicht eine standardisierte Datenaufnahme für Umsysteme und Pflegetool.

In einem bevorzugten Ausführungsbeispiel der Erfindung ist als weiteres Umsystem ferner ein spezielles Datensystem 13 zur Bereitstellung von Filialdaten vorgesehen. Das Umsystem 13 liefert beispielsweise an jedem Werktag Filial-, Kassen- und Gerätedaten sowie Einlieferschlusszeiten. Die Filialdaten dienen zur Verteilsteuerung der Stammdaten an die einzelnen Clients, so dass die Verteilung auf einfache Weise an neue Gegebenheiten angepasst werden kann.

Erfindungsgemäß ist eine Datenbereitstellungskomponente 40 zwischen die Umsysteme und die Clients geschaltet, welche die Verarbeitung der Daten der Umsysteme und die Verteilung der Daten an die Clients durchführt. Die Datenbereitstellungskomponente wird im Folgenden auch mit der Abkürzung DBK bezeichnet und stellt als einheitliche Schnittstelle einen Stammdatenservice für die Stammdaten liefernden Umsysteme bereit.

Die Umsysteme stellen die Daten vorzugsweise im XML-Format (Extensible Markup Language) bereit, da die Datenbereitstellungskomponente in einem besonders bevorzugten Ausführungsbeispiel so ausgestaltet ist, dass sie XML-Dateien mit der Formatsprache XSL (Extensible Stylesheet language) verarbeitet. Die Verarbeitung der Dateien erfolgt mit jeweiligen Transformationsdateien. Für die Daten der Umsysteme sind Transformationsdateien in der Datenbereitstellungskomponente hinterlegt, so dass die Daten aller Umsysteme zu Daten transformiert werden können, die von der DBK einheitlich verarbeitet werden. Dabei können auch Transformationsdateien für verschiedene Clientversionen hinterlegt werden, so dass für jegliche Client/Umsystem-Kombinationen eine Transformation zur Verfügung steht.

Wird als Messaging System das Produkt BizTalk verwendet, handelt es sich bei den Transformationsdateien beispielsweise um so genannte BizTalk-Maps. In einem weiteren Ausführungsbeispiel der Erfindung können als Transformationendateien XSLTs auch verwendet werden. Die Formatsprache XSL besteht aus zwei Komponenten, von denen die erste Komponente zur Formatierung von XML-Dateien dient. Eine zweite Komponente transformiert XML-Dateien in andere XML-Dateien, wobei für die Transformationskomponente die Bezeichnung XSLT (XSL Transformation) geläufig ist und hier verwendet wird.

Liegen die Daten der Umsysteme nicht im XML-Format vor, werden sie von der DBK vor der Verarbeitung entsprechend konvertiert. Beispielsweise können von den Umsystemen Formate wie das Flatfileformat DBF oder ASCIII geliefert werden. Auch das Umsystem 13 stellt Filialdaten vorzugsweise im XML-Format bereit.

Ein zentraler Bestandteil der DBK ist eine Datenbank 30, in welcher die Datenbestände aller Umsysteme nach einer entsprechenden Verarbeitung durch die Komponente hinterlegt werden. Bei der Datenbank handelt es sich vorzugsweise um einen SQL-Server. In der Datenbank werden ferner die Verarbeitungsschemata (z.B. BizTalk-Map oder XSLT) für die verschiedenen Datensysteme hinterlegt. Die Datenbank der DBK umfasst somit stets den für die Clients relevanten Datenbestand der Umsysteme. In einem besonders bevorzugten Ausführungsbeispiel der Erfindung werden verschiedene Inhalte der Datenbank in einem ausgelagerten Archiv gespeichert, falls für Stammdaten eine Speicherung über einen größeren Zeitraum gefordert ist.

Die Datenbereitstellungskomponente 40 weist als wesentlichen Bestandteil eine definierte Übergabeschnittstelle 50 zur Einlieferung von Dateien der Umsysteme auf. Dabei handelt es sich vorzugsweise um ein Fileshare, in dem jedes Umsystem seine Daten hinterlegt. Die Daten liegen vorzugsweise in einem ZIP-komprimierbaren Format vor. Die Einlieferung der Daten kann zeitgesteuert oder in Abhängigkeit von Ereignissen erfolgen. Beispielsweise können neue Daten einmal pro Tag oder bei jeder Änderung des Datenbestands eines Umsystems eingespeist werden.

Ist eine Datei 70 eines Umsystems in der Übergabeschnittstelle 50 der Datenbereitstellungskomponente 40 hinterlegt, erfolgt die weitere Verarbeitung in einer nachgelagerten Pipeline. Die Verarbeitung der Daten wird zweckmäßigerweise von einer Steuerungskomponente 60 gesteuert. Bei der Steuerungskomponente handelt es sich vorzugsweise um ein auf XML basierendes Messaging System und die Interaktion der Steuerungskomponente 60 mit den verschiedenen Funktionsbereichen der Datenbereitstellungskomponente 40 ist in Fig. 1 mit ausgefüllten Pfeilen dargestellt. Das Messaging System dient der Integration, Verwaltung und Automatisierung der Abläufe innerhalb der Datenbereitstellungskomponente und verbindet die Datenbereitstellungskomponente ferner mit anderen Komponenten des Gesamtsystems. Das Messaging System stellt Methoden zur Festlegung von Prozessen und Mechanismen zur Kommunikation zwischen den verschiedenen Anwendungen zur Verfügung, welche der Prozess verwendet. Das Steuerungsmodul 60 verbindet die Datenbereitstellungskomponente über Nachrichten mit anderen Systemen, wobei die Nachrichten beispielsweise bei der Verwendung von BizTalk über eine Vielzahl von Adaptern gesendet und empfangen werden. Die Adapter können beispielsweise Nachrichten über die Protokolle FILE, http, SMTP, SOAP, FTP, SQL und EDI senden und empfangen. Bei der Übertragung von Daten eines Umsystems an die Datenbereitstellungskomponente wird ein Ereignis ausgelöst, das die weitere Verarbeitung der Daten bestimmt.

Zudem steuert die Steuerungskomponente 60 das Zusammenspiel der DBK mit anderen Komponenten des Gesamtsystems. Dazu gehört beispielsweise eine Kommunikationskomponente 100, welche die von der DBK aufbereiteten Daten an die Clients verteilt. Die Kommunikationskomponente ist dabei vorzugsweise so ausgebildet, dass sie die gesamte Nachrichtenübermittlung zwischen dem Frontend in Form der Filialen und dem Backend in Form der Umsysteme und der DBK durchführt. So werden auch Fehlermeldungen und/oder Datenanforderungen der Filialen an die Kommunikationskomponente 100 übermittelt, welche diese an die DBK weiterleitet. In einem besonders bevorzugten Ausführungsbeispiel der Erfindung werden Nachrichten der Filialen ebenfalls in die Übergabeschnittstelle 50 eingeliefert, von der aus sie in der Datenbereitstellungskomponente wie Daten der Umsysteme verarbeitet werden.

Es kann vorgesehen sein, dass die Datenbereitstellungskomponente nicht direkt mit der Kommunikationskomponente in Verbindung steht, sondern eine weitere Einlieferungskomponente des Systems dazwischen geschaltet ist.

Die Steuerungskomponente 60 steht in Verbindung mit der Übergabeschnittstelle 50 und einer Vorverarbeitungskomponente 80, wobei die Steuerungskomponente die Orchestrierung der abzubildenden Prozesse übernimmt. Eine Nachricht wird über einen Empfangsadapter empfangen und über eine Empfangspipeline verarbeitet. Die Pipeline enthält Komponenten zur Verarbeitung der Nachricht, woraufhin die Nachricht über verschiedene weitere Schritte einer Sendepipeline übergeben wird. Die Nachricht wird über einen Sendeadapter versendet, der einen geeigneten Mechanismus verwendet, um mit der Anwendung zu kommunizieren, für welche die Nachricht bestimmt ist.

Ein Umsystem stellt seine Dateien auf einem Fileshare 50 vorzugsweise in einem definierten Verzeichnis bereit. Es kann vorgesehen sein, dass das Verzeichnis in bestimmten Zeitabständen einem zentralen Archiv übergeben wird. Eine in der Übergabeschnittstelle empfangene Datei wird an die Vorverarbeitungskomponente 80 übergeben und gegebenenfalls dekomprimiert. Handelt es sich bei der Datei bereits um eine XML-Datei, wird diese in einem Validator geprüft und das Ankommen protokolliert. Der Validator prüft, ob die Datei einem hinterlegten Schema des Umsystems entspricht, wobei das Schema anhand von Metainformationen aus einer Tabelle in der Datenbank 30 geladen wird. Diese Funktionalität ist vorzugsweise in einer Komponente gekapselt, die beispielhaft als *XMLValidator* bezeichnet wird. Schlägt die Validierung fehl, wird zweckmäßigerweise eine Benachrichtigung an das liefernde Umsystem geschickt. Beispielsweise kann die E-Mailadresse des Umsystems von der Steuerungskomponente 60 anhand des Umsystemnamens aus der Datenbank 30 ausgelesen und eine Nachricht an das Umsystem gesendet werden.

Kann die Datei dagegen erfolgreich in eine Nachrichtenkomponente (*MessageBox*) der Steuerungskomponente 60 geschrieben werden, wird ein Tracking-Record erzeugt. Ferner wird die Datei in eine Nachricht in einem Envelope verpackt. In den Header dieses Envelopes werden vorzugsweise die Version des geprüften Schemas, eine Message-ID, sowie der Name des liefernden Umsystems in zugehörige Attributfelder eingetragen, da diese bei der anschließenden Verarbeitung in einer Mapping-Komponente 81 benötigt werden können. Die Message-ID wird dabei auch für ein Monitoring der Anwendung verwendet.

Im nächsten Schritt wird die Datei in einer Mapping-Komponente 81 so transformiert, dass sie in die Datenbank 30 eingetragen werden kann. Dazu wird aus einer Tabelle der Datenbank 30 mit der beispielhaften Bezeichnung *T_XSLMapping* eine hinterlegte Transformationsdatei (z.B. BizTalk-Map oder XSLT) herangezogen, anhand der sich die XML-Datei in eine Update-Datennachricht 71 transformieren lässt. Dadurch erfolgt eine Konvertierung der Datei des Umsystems auf das Datenmodell der Datenbereitstellungskomponente. Die zum Mapping erforderliche Datei kann anhand der Metadaten der Schema-Version und des Namens des liefernden Umsystems bestimmt werden, wobei die Tabelle beispielsweise in der Datenbank 30 hinterlegt sein kann. Die Datenpflege dieser Tabelle erfolgt vorzugsweise über das Pflegetool 12 und die Tabelle enthält alle Mapping-Stände, die für die Transformation von Daten der Umsysteme erforderlich sein könnten.

Als Parameter wird ein Envelope übergeben und aus der Tabelle *T_XSLMapping* werden alle Datensätze ausgelesen, die mit der im Envelope enthaltenen Schema-Version und dem Umsystem übereinstimmen. Dabei kann es sich um ein oder mehrere Datensätze handeln. Die Nachricht des Umsystems wird aus dem Envelope entnommen und mit Hilfe der Transformationsdatei in eine Update-Datennachricht 71 transformiert. Bei der Update-Datennachricht handelt es sich um Datenbankanweisungen, mit denen die Daten des betreffenden Umsystems in die Datenbank 30 eingepflegt werden können. Die von der Mapping-Komponente erzeugte Update-Datennachricht wird ebenfalls in einen Envelope verpackt und einem Persister übergeben, welcher die Daten in die Datenbank 30 einpflegt. Der Persister kann als Assembly in einem Global Assembly Cache (GAC) ausgebildet sein und nimmt den Envelope mit den transformierten Daten entgegen. Schlägt die Speicherung der Update-Datennachricht in der Datenbank fehl, erfolgt vorzugsweise eine n-fache Wiederholung der Speicherversuche.

Bei einer Update-Datennachricht 71 handelt es sich um eine Datei, die eine Tabelle enthält, in der unter anderem die Lieferversion gespeichert ist. In der Update-Datennachricht sind ferner Anweisungen (Stored Procedures) enthalten, welche nach dem Einfügen der Daten in die Datenbank ausgeführt werden sollen. Beispielsweise kann eine Anweisung erfordern, dass Schema- und/oder Mapping-Versionen hinzugefügt werden.

Handelt es sich bei den im Fileshare 50 eingelieferten Daten um eine Datei mit einem anderen Format als XML, erfolgt vor der Konvertierung in eine XML-Datei vorzugsweise eine Speicherung dieser Datei in der Datenbank 30. Wird beispielsweise eine Datei im Format DBF eingeliefert, wird das DBF-File in die Datenbank 30 getrackt und danach anhand eines Flatfile-Schemas in ein XML-File konvertiert. Das Flatfileschema ist dabei beispielsweise in der Datenbank 30 hinterlegt und kann zur Konvertierung herangezogen werden. Liegt die Datei nun in einem XML-Format vor, schließt sich die beschriebene Weiterverarbeitung der Datei zu einer Update-Datennachricht und die Speicherung der Daten in der Datenbank 30 an.

In der Datenbank der Datenbereitstellungskomponente wird so das Stammdatenmodell aller Clients vorgehalten und Stammdatenlieferungen von den verschiedenen Umsystemen gespeichert. Die Datenlieferungen werden dabei filialgetreu historisiert, so dass jeder Stammdatenzustand einer Filiale bzw. eines Clients festgehalten und auf diese Weise eine Versionsführung für die Stammdaten der Clients vorgenommen werden kann. Die Versionierung erfolgt dabei vorzugsweise durch die eingangsverarbeitenden Prozesse.

Auch die Filialdaten des Umsystems 13 werden vorzugsweise als XML-Datei im Fileshare 50 der Datenbereitstellungskomponente hinterlegt und von der Vorverarbeitungskomponente in eine Update-Datennachricht umgewandelt. Die Daten werden ebenfalls in die Datenbank 30 eingelesen und werden über eine Verteilsteuerungskomponente 90 für die Verteilung der von den Umsystemen erhaltenen Daten an die Clients verwendet.

An die beschriebene Eingangsverarbeitung der Stammdaten bis in die Datenbank 30 schließt sich die Ausgangsverarbeitung an, zu welcher ein Deltagenerator 31 zu zählen ist. Der Deltagenerator ist zuständig für die Erstellung und Übersendung der Stammdatenlieferungen von den Umsystemen an die Clients. Der Deltagenerator erzeugt aus den Stammdatenlieferungen Deltalieferungen für die jeweiligen Frontends, wobei die Deltalieferungen zweckmäßigerweise in einem Format bereitgestellt werden, welches ein automatisiertes Einspielen in ein Datensystem des Frontends ermöglicht. Vorzugsweise wird dazu ebenfalls das Format XML verwendet.

Lieferungen der Umsysteme entsprechen bei den Stammdatenlieferungen vordefinierten Schemata, wobei diese Schemata in der Datenbank 30 entsprechende Datenbereiche abdecken. Die Erzeugung der Stammdatenlieferungen für die Frontends erfolgt daher schemabezogen. Der Deltagenerator wird vorzugsweise ebenfalls von der Steuerungskomponente 60 angesteuert, wobei er beispielsweise zeitgesteuert oder ereignisgesteuert gestartet werden kann. Der Deltagenerator wird vorzugsweise von dem Pflegetool 12 konfiguriert. Die Konfiguration kann dabei die Definition neuer Schemata, die Deaktivierung alter Schemata und/oder die Zuordnung der Datenbereiche zu den Schemata beinhalten. Eine Schemadefinition umfasst mehrere Tabellen, in denen definiert ist, welche Tabellen zu einem Schema gehören und wie diese Tabellen strukturiert sind. Die Schemadefinition wird für den Deltagenerator dazu genutzt, um dynamisch zur Laufzeit die Schemakonfiguration auslesen, die Datenbereiche zu identifizieren, die Struktur der Datenbereiche auszuwerten und daraus Datensätze zu generieren.

Der Deltagenerator erzeugt aus den Stammdatenlieferungen Deltas und Update-Datenpakete 72, welche die Datenänderungen in Form von Datenbankanweisungen enthalten. Bei diesen Datenbankanweisungen kann es sich beispielsweise ebenfalls um SQL-Statements handeln. Die Umsetzung dieser Prozesse kann durch Prozesse der Steuerungskomponente 60 und den in der Datenbank gespeicherten Anweisungen (Stored Procedures) erfolgen. Das Steuerungsmodul übernimmt dabei neben der Steuerung vorzugsweise auch die Kontrolle und die Protokollierung der Prozesse. Die Prozesse werden im Wesentlichen durch Datenbankprozeduren umgesetzt. Der Deltagenerator führt dabei eine schemabezogene Delta-Betrachtung zwischen zwei Versionsständen durch und das so ermittelte Delta wird als Datensatz an das Steuerungsmodul 60 zurückgegeben.

Bei der Deltaermittlung ermittelt der Generator pro Client alle neuen Lieferungen, die noch nicht versendet wurden. Zu diesen Lieferungen werden die zuletzt gesendeten Lieferungen ermittelt, und ein Vergleich der beiden Lieferungen ergibt die Datensätze, welche in den alten, jedoch nicht in den neuen Lieferungen vorhanden sind. Für diese Datensätze muss beim Client eine Löschung erfolgen. Ferner ergibt der Vergleich die Datensätze, die in der neuen, jedoch nicht in der alten Lieferung enthalten sind. Diese Datensätze müssen am Client eingefügt werden. Für geänderte Datensätze erfolgen dabei am Client vorzugsweise zuerst eine Löschung und dann eine Einfügung des neuen Datensatzes.

Der Deltagenerator bereitet die Deltas zu Datensätzen auf und übergibt diese an das Steuerungsmodul. Das Steuerungsmodul nimmt die Datensätze als Datenstrom beispielsweise von einem SQL-Server entgegen und erzeugt daraus vorzugsweise zwei physisch getrennte XML-Dateien. Eine erste Datei 73 mit der beispielhaften Bezeichnung *UpdatePackage.xml* ist eine Datendatei, während es sich bei einer zweiten Datei 74 mit der beispielhaften Bezeichnung *Ziele.xml* um eine Steuerdatei handelt. In der Datendatei 73 sind die Deltas in Form von Datenbankanweisungen enthalten, welche in der Datenbank eines Clients verarbeitet werden können. Die Steuerdatei 74 enthält die Adressierung der Datei. Die beiden Dateien werden vorzugsweise komprimiert und zur Übergabe der Daten an die Kommunikationskomponente 100 wird eine Ausgangsschnittstelle 110 genutzt.

Dabei kann zwischen die Ausgangsschnittstelle 110 und die Kommunikationskomponente 100 eine weitere Einlieferungskomponente geschaltet sein, welche in der Fig. 1 nicht dargestellt ist. Diese Einlieferungskomponente kann den gesamten Transfer von Daten von mehreren Komponenten des Systems übernehmen.

In einem besonders bevorzugten Ausführungsbeispiel der Erfindung erfolgt über die Datenbereitstellungskomponente 40 neben der Übermittlung von Stammdaten an die Clients auch eine Übermittlung von Strukturänderungen an die Clients. Dazu wird als weiteres Umsystem das Pflegetool 12 an die Datenbereitstellungskomponente angebunden. Falls beispielsweise für die Software an den Frontends neue Strukturen in den Datenbanken der Clients benötigt werden, können diese über das Pflegetool manuell definiert und über die DBK an die Clients verteilt werden. Wurden die Strukturänderungen an die Clients übermittelt, können die Umsysteme die entsprechenden Stammdaten liefern.

Es hat sich als zweckmäßig erwiesen, die für eine Strukturänderung erforderlichen Datenbankanweisungen in einer Testumgebung zu testen und diese dann über die Übergabeschnittstelle in die Datenbereitstellungskomponente einzuspielen. Vorzugsweise übergibt das Pflegetool somit bereits eine Update-Datennachricht an die Datenbank 30, so dass kein Mapping erforderlich ist. Die Anweisungen werden in die Datenbank 30 geschrieben und die Mappings der Umsysteme entsprechend angepasst. Die Filialen, an denen die Strukturänderungen greifen sollen, erhalten über die Kommunikationskomponente 100 die dazu erforderlichen Datenbankanweisungen.
In einem besonders bevorzugten Ausführungsbeispiel der Erfindung wird in der Anordnung aus Vorrichtungen ferner eine Überwachung der Prozesse durchgeführt. Eine in der Fig. 1 nicht dargestellte Monitoringkomponente wird dazu genutzt, den Weg einer Datenlieferung in der Datenbereitstellungskomponente nachvollziehen zu können. Hierzu wird die Monitoringkomponente an wichtigen Stellen im Ablauf aufgerufen, wodurch der aktuelle Status der Verarbeitung gespeichert und nachvollzogen werden kann.

Kann ein Client eine Stammdatenlieferung nicht verarbeiten, erzeugt er eine Fehlermeldung an die Datenbereitstellungskomponente. Bei der Verarbeitung kann er beispielsweise feststellen, dass ein Update-Datenpaket nicht gültig oder die Update-ID falsch sind. Daraufhin markiert er das Paket als fehlerhaft und meldet über eine Fehlerquittung den Fehlersachverhalt an die DBK zurück. Die Übermittlung der Fehlermeldung an die DBK erfolgt vorzugsweise ebenfalls über die Kommunikationskomponente 100 und in Form eines XML-Dokuments. Besonders bevorzugt ist die Einbettung der XML-Datei in einen SOAP-Envelope. Die Fehlermeldung wird in das Fileshare 50 eingestellt und von der Datenbereitstellungskomponente verarbeitet.

In einem Ausführungsbeispiel der Erfindung enthält die Fehlermeldung einen Fehlercode, der angibt, warum das Paket nicht verarbeitet werden konnte und wie in der DBK darauf zu reagieren ist. Beispielsweise kann es sich um ein falsches Delta-Paket handeln, das beim Client nicht gegen ein vorgegebenes Schema validiert werden kann. Das Schema kann durch eine XSD-Datei gebildet werden, gegen die Datenpakete validiert werden und es kann keine Validierung erfolgen, wenn beispielsweise kein gültiges XML-Dokument enthalten ist. In diesem Fall fordert der Client ein neues Update-Datenpaket mit der gleichen Update-ID an.

Der Client kann ferner ein Vollupdate anfordern, woraufhin er eine Komplettbefüllung erhält. Darüber hinaus kann der Client ein Update-Datenpaket der Nr. n erfolgreich verarbeitet und nun ein Paket mit der Nr. n+3 erhalten haben. Daraufhin fordert er die Pakete mit der Nr. n+1 und n+2 neu an. Auch eine erfolgreiche Verarbeitung eines Pakets der Nr. n und eine Anforderung aller Pakete n+1 ist möglich.

Da ein Update-Datenpaket eine Filial-ID enthält, kann eine Überprüfung der ID ergeben, dass das Paket nicht für die Filiale des Clients vorgesehen ist, so dass der Client ebenfalls ein neues Paket anfordert.

Eine Fehlermeldung wird von der Datenbereitstellungskomponente 40 so verarbeitet, dass die Nachricht in Parameter für Anweisungen transformiert wird. Die Anweisungen werden aufgerufen und als Ergebnis liefert die Anweisung die Daten, die zur Erstellung des geforderten Updatepakets notwendig sind. Das geforderte Update-Datenpaket wird erzeugt und zur Abholung durch die Kommunikationskomponente in den Fileshare eingestellt. Vorzugsweise wird die Fehlermeldung in einer Tabelle der Datenbank 30 gesichert.

### Bezugszeichenliste:

- 10,11: Datensystem, Umsystem
- 12: Pflegetool
- 13: Umsystem zur Lieferung von Filialdaten
- 20: Client, Filiale
- 30: Datenbank
- 31: Deltagenerator
- 40: Datenbereitstellungskomponente
- 50: Übergabeschnittstelle
- 60: Steuerungsmodul, Steuerungskomponente
- 70: Datei eines Umsystems im Format des Umsystems
- 71: Update-Datennachricht im Format der Datenbank der Datenbereitstellungskomponente
- 72: Update-Datenpaket
- 73: Datendatei im XML-Format
- 74: Steuerdatei im XML-Format
- 80: Vorverarbeitungskomponente
- 81: Mapping-Komponente
- 90: Verteilsteuerungskomponente
- 100: Kommunikationskomponente
- 110: Ausgangsschnittstelle

## Patentansprüche

1. Verfahren zur Bereitstellung von Daten mehrerer Datensysteme für wenigstens einen Client (20) eines computergestützten Filialsystems, wobei das Verfahren den Betrieb einer zentralen Datenbereitstellungskomponente (40) zur Annahme von Daten der Datensysteme (10;11;12;13) und zur Weiterleitung der Daten an den Client (20) beinhaltet, **gekennzeichnet**
**durch** folgende Schritte:
- Hinterlegung von Verarbeitungsschemata für verschiedene Datenformate der Datensysteme (10;11;12;13) in einer Datenbank (30) der zentralen Datenbereitstellungskomponente (40), wobei die Hinterlegung der Verarbeitungsschemata durch ein Steuerungsmodul (60) der Datenbereitstellungskomponente (40) gesteuert wird;
- Übergabe einer Datei (70) von einem Datensystem (10;11;12;13) an eine Übergabeschnittstelle (50) der Datenbereitstellungskomponente (40);
- Übergabe der Datei (70) an eine Vorverarbeitungskomponente (80), wobei die Übergabe durch das Steuerungsmodul (60) gesteuert wird;
- Prüfung der Datei (70) in der Vorverarbeitungskomponente (80);
- Einlesen des Verarbeitungsschemas des Datensystems (10;11;12;13) in die Vorverarbeitungskomponente (80) und Umwandlung der Datei (70) in eine Update-Datennachricht (71) mit dem Format der Datenbank (30);
- Persistieren der Update-Datennachricht (71) in der Vorverarbeitungskomponente (80), Setzen einer Lieferversion und Einlesen der Update-Datennachricht (71) in die Datenbank (30);
- Start eines Deltagenerators (90) durch das Steuerungsmodul (60) und Erzeugung einer Differenz zwischen einem zuletzt an einen Client (20) übermittelten Datenbestand und dem aktuellen Datenbestand in der Datenbank (30) und Einbindung der erzeugten Differenz in ein Update-Datenpaket (72);
- Erzeugung von zwei Dateien aus dem Update-Paket (72) durch die Steuerungskomponente (60), von denen die erste Datei (73) eine Datendatei und die zweite Datei (74) eine Steuerdatei ist; und
- Übermittlung der Dateien (73;74) über eine Ausgangsschnittstelle (110) an einen Client (20).

2. Verfahren nach Anspruch 1,
**dadurch gekennzeichnet,**
**dass** die Datei (70) von einem Datensystem (10;11;12;13) im XML-Format an die Übergabeschnittstelle (50) übergeben wird oder vor der Umwandlung in eine Update-Datennachricht (71) in ein XML-Format umgewandelt wird.

3. Verfahren nach einem oder beiden der Ansprüche 1 und 2,
**dadurch gekennzeichnet,**
**dass** die Datendatei (73) und die Steuerdatei (74), welche an den Client übermittelt werden, XML-Dateien sind.

4. Verfahren nach einem oder mehreren der Ansprüche 1 bis 3,
**dadurch gekennzeichnet,**
**dass** Fehlermeldungen des Clients (20) der Datenbereitstellungskomponente (40) über die Übergabeschnittstelle (50) an die Datenbereitstellungskomponente (40) übermittelt werden.

5. Verfahren nach einem oder mehreren der Ansprüche 1 bis 4,
**dadurch gekennzeichnet,**
**dass** ein Datensystem (13) Filialdaten für die Verteilung von Stammdaten der Datensysteme als Datei an die Datenbereitstellungskomponente (40) übergibt, welche diese in eine Update-Datennachricht (71) umwandelt und in die Datenbank (30) einspeist, wobei die gespeicherten Filialdaten von einer Verteilsteuerungskomponente (90) für die Verteilung der Stammdaten an die Clients (20) herangezogen werden.

6. Anordnung aus Vorrichtungen zur Bereitstellung von Daten mehrerer Datensysteme für wenigstens einen Client (20) eines computergestützten Filialsystems, wobei die Anordnung eine zentrale Datenbereitstellungskomponente (40) zur Annahme von Daten der Datensysteme (10;11;12;13) und zur Weiterleitung der Daten an den Client (20) umfasst, **gekennzeichnet**
**durch** folgende Merkmale:
- Datenbereitstellungskomponente (40) in Verbindung mit mehreren Datensystemen (10;11;12;13) und einer Kommunikationskomponente (100) zur Übermittlung von Daten an wenigstens einen Client (20); wobei die Datenbereitstellungskomponente (40) folgende Merkmale umfasst:
- Datenbank (30);
- Übergabeschnittstelle (50) zur Übergabe von Dateien (70) der Datensysteme (10;11;12;13) an die Datenbereitstellungskomponente (40);
- Steuerungskomponente (60) zur Steuerung der Prozesse innerhalb der Datenbereitstellungskomponente (40) und der Kommunikation der Datenbereitstellungskomponente mit anderen Komponenten des Systems;
- Vorverarbeitungskomponente (80) zur Prüfung einer Datei (70) eines Datensystems (10;11;12;13) und zur Umwandlung der Datei in eine Update-Datennachricht (71) im Format der Datenbank (30);
- Delta-Generator (31) zur Erzeugung einer Differenz zwischen einem alten und dem durch die Update-Datennachricht (71) erzeugten neuen Datenbestand der Datenbank (30) und Mittel zur Einbindung der erzeugten Differenz in ein Update-Datenpaket (72);
- Mittel zur Erzeugung von zwei Dateien aus dem Update-Paket (72) durch die Steuerungskomponente (60), von denen die erste Datei (73) eine Datendatei und die zweite Datei (74) eine Steuerdatei ist; und
- Ausgangsschnittstelle (110) zur Übermittlung der Dateien (73;74) an einen Client (20).

7. Anordnung nach Anspruch 6,
**dadurch gekennzeichnet,**
**dass** die Datenbereitstellungskomponente (40) Mittel zur Umwandlung der Datei (70) eines Datensystems (10;11;12;13) in ein XML-Format umfasst.

8. Anordnung nach einem oder beiden der Ansprüche 6 und 7,
**dadurch gekennzeichnet,**
**dass** die Vorverarbeitungskomponente (80) für die Umwandlung der Datei (70) in eine Update-Datennachricht (71) Mittel zum Einlesen einer Transformationsdatei aus der Datenbank (30) in eine Mapping-Komponente (81) der Datenbereitstellungskomponente (40) umfasst.

9. Anordnung nach einem oder mehreren der Ansprüche 6 bis 8,
**dadurch gekennzeichnet,**
**dass** die Datenbank (30) ein SQL-Server ist, der Mittel zum Einlesen einer Update-Datennachricht (71) umfasst.

10. Anordnung nach einem oder mehreren der Ansprüche 6 bis 9,
**dadurch gekennzeichnet,**
**dass** die Datendatei (73) und die Steuerdatei (74), welche an den Client übermittelt werden, ein XML-Format haben.

11. Anordnung nach einem oder mehreren der Ansprüche 6 bis 10,
**dadurch gekennzeichnet,**
**dass** ein Datensystem (13) an die Datenbereitstellungskomponente (40) angeschlossen ist, das Filialdaten für die Verteilung der Stammdaten der Datensysteme (10;11,12) bereitstellt, wobei die Filialdaten in der Datenbank (30) gespeichert sind und eine Verteilsteuerungskomponente (90) Mittel zum Heranziehen der Filialdaten zur Verteilung der Stammdaten an die Clients (20) umfasst.

12. Computerlesbares Medium, das Befehle zum Ausführen der Schritte des Verfahrens nach einem oder mehreren der Ansprüche 1 bis 5 auf einem Computermittel aufweist.
